# EUROPEAN PATENT SPECIFICATION

(11) **EP 2 401 662 B1**
(45) Date of publication and mention of the grant of the patent: **30.10.2013**
(21) Application number: 10701774.1
(22) Date of filing: 21.01.2010
(51) Int. Cl.: G05D 16/06, G05D 16/10

(54) **IN-LINE PRESSURE REGULATORS**
IN-LINE-DRUCK-REGLER
RÉGULATEURS DE PRESSION EN LIGNE

(30) Priority: 26.02.2009 US 393799
(43) Date of publication of application: 04.01.2012
(73) Proprietor: Tescom Corporation, Elk River, MN 55330 (US)
(72) Inventor: PATTERSON, Daryll, Duane, North Brooklyn Park MN 55444 (US); BURGETT, Eric, Jacob, Eden Prairie MN 55347 (US)
(74) Representative: Bohnenberger, Johannes
(86) International application number: PCT/US2010/021666
(87) International publication number: WO 2010/098913

(56) References cited:
- US-A- 3 074 426
- US-A- 3 307 597
- US-A- 4 791 957
- US-A1- 2007 181 198

## Description

### FIELD OF THE DISCLOSURE

This patent relates generally to pressure regulators and, more particularly, to in-line pressure regulators.

### BACKGROUND

Process control systems utilize a variety of field devices to control process parameters. Fluid regulators are commonly distributed throughout process control systems to control the pressures of various fluids (e.g., liquids, gasses, etc.). Fluid regulators are typically used to regulate the pressure of a fluid to a substantially constant value. Specifically, a fluid regulator has an inlet that typically receives a supply fluid at a relatively high pressure, which may vary or fluctuate, and provides a relatively lower and substantially constant pressure at an outlet. For example, a gas regulator associated with a piece of equipment may receive a gas having a relatively high pressure from a gas distribution source and may regulate the gas to have a lower, substantially constant pressure suitable for safe, efficient use by the equipment.

In some instances, to reduce decaying inlet effect, single-stage regulators may be coupled to an in-line regulator. Typically, in such a configuration, the in-line regulator functions as a first stage pressure reducing regulator and the single-stage regulator functions as a second stage pressure reducing regulator. Such in-line regulators are externally positioned relative to the single-stage regulator which, in some instances, requires additional space and system length (e.g., pipe run lengths) when incorporating these in-line regulators, which may pose some challenges in designing processes, particularly in cases where available space is very limited.

Document U.S. 4,791,957 A discloses a stem regulator system, similar to that outlined in the preamble of claim 1. Additionally, the stem regulator of U.S. 4,791,957 is for direct mounting on the valve of a high pressure gas cylinder to provide a reduced delivery pressure for components or circuits of lesser pressure rating. The main body of the regulator, which contains its working parts, is adapted to serve, for example, as an inlet nipple for connecting the cylinder valve to a conventional adjustable pressure regulator. At one end, the body has a cylinder valve coupling face and nut and at the appropriate end has an adaptor threaded to mate with the conventional regulator. A compact design and straight-through flow path of the regulator simplifies installation and ensures durability.

### SUMMARY

The present invention provides an in-line pressure regulator according to independent claim 1. The in-line pressure regulator may be further characterised according to the dependent claims.

### BRIEF DESCRIPTION OF THE DRAWINGS

FIG. 1 depicts a known in-line regulator.

FIG. 2 depicts a known regulator and an example in-line regulator positioned in an inlet port of the known regulator.

FIG. 3 depicts an example in-line regulator to be positioned in the inlet port of another regulator.

FIG. 4 depicts another example in-line regulator to be positioned in the inlet port of another regulator.

FIG. 5 depicts a cross-sectional view along lines C-C of FIG. 4.

FIG. 6 depicts a cross-sectional view along lines B-B of FIG. 4.

FIG. 7 depicts a cross-sectional view along lines A-A of FIG. 4.

FIG. 8 depicts another example in-line regulator to be positioned in the inlet port of another regulator.

FIG. 9 depicts another example in-line regulator to be substantially positioned in the inlet port of another regulator.

### DETAILED DESCRIPTION

Certain examples are shown in the above-identified figures and described in detail below. In describing these examples, like or identical reference numbers are used to identify the same or similar elements. The figures are not necessarily to scale and certain features and certain views of the figures may be shown exaggerated in scale or in schematic for clarity and/or conciseness. Additionally, several examples have been described throughout this specification. Any features from any example may be included with, a replacement for, or otherwise combined with other features from other examples.

The example in-line regulators described herein enable, for example, single-stage pressure regulators to be upgraded to include both a first stage regulator and a second stage regulator while maintaining the same face-to-face dimensions of the single-stage pressure regulator. Upgrading a single-stage pressure regulator to a two-stage configuration reduces the decaying inlet effect and provides for greater control in outlet pressure settings in applications that have relatively large variation between the inlet and the outlet pressures.

In contrast to known in-line regulators, the example in-line regulators described herein are to be positioned substantially entirely inside of the inlet port of, for example, another single-stage regulator, which decreases the overall weight, the number of overall components and the manufacturing cost of such in-line regulators. In particular, the example in-line regulators described herein are provided with a piston assembly that is sized to slidably and sealingly engage a surface of the inlet port of the other single-stage regulator, which eliminates the need for a housing that is typically used with known in-line regulators. Such an approach, enables the example in-line regulators described herein to be installed without cutting and/or re-routing existing piping, which significantly reduces installation time and costs.

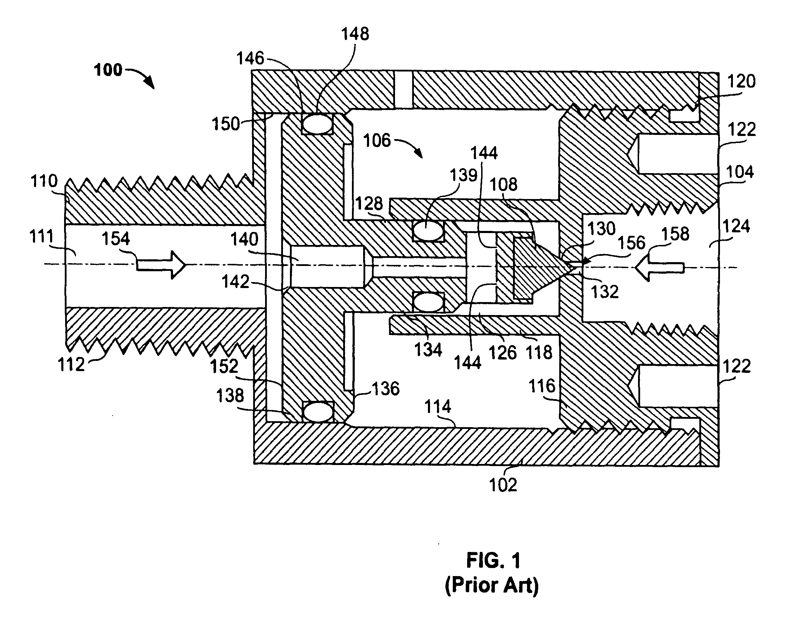

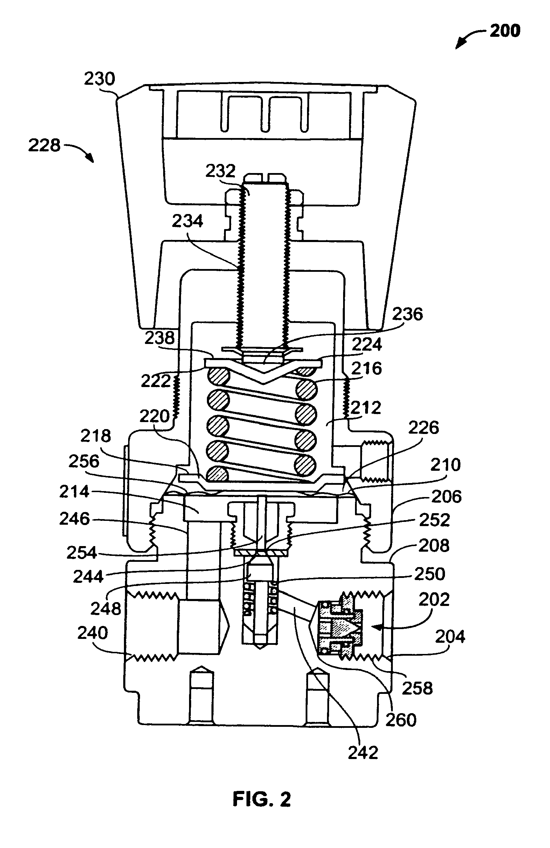

FIG. 1 depicts a known in-line regulator 100 that includes a housing 102, a body 104, a piston assembly 106 and a valve plug 108. The housing 102 includes an external outlet coupling 110 (e.g., male) defining an aperture 111. The outlet coupling 110 includes external threads 112 to threadingly engage interior threads 258 (FIG. 2) of an inlet port 204 (FIG. 2) of, for example, a regulator 200 (FIG. 2). Additionally, the housing 102 defines a bore 114 in which the body 104, the piston assembly 106 and the valve plug 108 are positioned.

The body 104 includes a first portion 116 and a second portion 118. The second portion 118 extends into the bore 114 and the first portion 116 is positioned adjacent an opening 120 of the housing 102. The first portion 116 includes a plurality of slots 122 to be engaged by a tool (not shown) to enable the body 104 to be properly positioned within the bore 114 of the housing 102. Additionally, the first portion 116 includes an inlet port 124 to be threadingly engaged by a pipe or other fluid coupling structure (not shown). The second portion 118 includes a bore 126 in which an elongated member 128 of the piston assembly 106 is positioned and a seating surface 130 of an aperture 132. Generally, the elongated member 128 slidingly and sealingly engages a surface 134 of the bore 126 to substantially prevent fluid flowing through the in-line regulator 100 from acting against a surface 136 of a head 138 of the piston assembly 106. As depicted in FIG. 1, a seal 139 (e.g., an o-ring) surrounds a portion of the elongated member 128 to facilitate the sealing engagement between the elongated member 128 and the surface 134 of the bore 126.

The piston assembly 106 includes the head 138 and the elongated member 128 that is operatively coupled to the valve plug 108. The valve plug 108 is positioned in the bore 126 of the second portion 118 and is configured to engage the seating surface 130. The piston assembly 106 includes an aperture 140 having a first opening 142 opposite a plurality of second openings 144. The head 138 defines a groove 146 (e.g., a circumferential groove) that receives a seal 148 that slidably and sealingly engages a surface 150 of the housing 102.

Generally, the position of the head 138 affects the position of the valve plug 108 relative to the aperture 132 and, thus, the flow of fluid through the in-line regulator 100. More specifically, as the valve plug 108 moves toward and/or engages the seating surface 130, the amount of fluid flowing through the aperture 132 and, thus, between the inlet port 124 and the aperture 111 of the outlet coupling 110 decreases. Alternatively, as the valve plug 108 moves away from the seating surface 130, the amount of fluid flowing through the aperture 132 and, thus, between the inlet port 124 and the aperture 111 of the outlet coupling 110 increases.

In operation, a downstream pressure applies a force on a face 152 of the head 138 in a direction generally represented by arrow 154 that urges the valve plug 108 toward the seating surface 130, and a pressure in the inlet port 124 applies a force on a portion 156 of the valve plug 108 in a direction generally represented by arrow 158 that urges the valve plug 108 away from the seating surface 130. If the downstream pressure approaches and/or equals a set pressure, the force applied to the face 152 of the head 138 overcomes the force applied to the portion 156 of the valve plug 108 and, thus, the piston assembly 106 and the valve plug 108 move within the housing 102 such that the valve plug 108 moves toward the seating surface 130. Alternatively, if the downstream pressure decreases below the set pressure, the force applied to the portion 156 of the valve plug 108 overcomes the force applied to the face 152 of the head 138 via the downstream pressure and, thus, the piston assembly 106 and the valve plug 108 move within the housing 102 such that the valve plug 108 moves away from the seating surface 130 to enable fluid to flow between the inlet port 124 and the aperture 111 of the outlet coupling 110.

While the in-line regulator 100 provides many benefits, in some instances, the additional space and system length (e.g., pipe run lengths) required to incorporate the in-line regulator 100 pose some challenges in designing processes, particularly in cases where available space is very limited. Additionally, the external position of the in-line regulator 100 relative to the regulator 200 (FIG. 2), requires that the in-line regulator 100 be provided with the housing 102 in which the body 104, the piston assembly 106 and the valve plug 108 are positioned. This requirement increases the overall weight, the number of components and the manufacturing cost of such in-line regulators 100.

FIG. 2 depicts the known regulator 200 and an example in-line regulator 202 (e.g., a first stage in-line pressure reducing regulator) positioned in the inlet port 204 of the regulator 200, which enables the regulator 200 to have the same face-to-face dimensions while additionally providing two-stage pressure reducing functionality. The in-line regulator 202 may be operable under any suitable operating conditions such as, for example, high pressure (e.g., 10,000 psi) conditions and/or conditions under which the flow of corrosive of materials is controlled. Additionally, the internal position of the in-line regulator 202 relative to the inlet port 204 substantially eliminates the need, when installing the in-line regulator 202, for existing piping to be cut and/or re-routed, which significantly reduces installation time and costs. While the example in-line regulator 202 is depicted as implemented with the known regulator 200, the in-line regulator 200 may be implemented with any other suitable regulator or fluid control device such as, for example, a valve.

The regulator 200 includes an upper body 206 threadingly coupled to a lower body 208. A diaphragm 210 is positioned between the upper body 206 and the lower body 208 to separate a first chamber 212, which is partially defined by the upper body 206, and a second chamber 214, which is partially defined by the lower body 208.

A spring 216 is positioned in the first chamber 212 between an upper surface 218 of a diaphragm plate 220 and a lower surface 222 of a spring seat 224. To change an amount of pre-set force or load exerted on a first side 226 of the diaphragm 210 via the spring 216, the regulator 200 is provided with a spring adjuster 228. The spring adjuster 228 includes an externally accessible knob 230 that is coupled to a threaded shaft 232 that threadingly engages an aperture 234 of the upper body 206. The threaded shaft 232 includes an end 236 that engages an upper side 238 of the spring seat 224. Generally, rotating the knob 230 (e.g., clockwise or counter clockwise) changes the position of the end 236 relative to the diaphragm plate 220 and, thus, compresses or decompresses the spring 216, which changes the amount of the pre-set force or load exerted on the first side 226 of the diaphragm 210.

The lower body 208 includes the inlet port 204, in which the example in-line regulator 202 is positioned, and an outlet port 240. The inlet port 204 and the outlet port 240 are fluidly coupled via a first fluid passageway 242, an aperture 244, the second chamber 214 and a second fluid passageway 246. To control the flow of fluid between the inlet port 204 and the outlet port 240, the regulator 200 is provided with a biased valve plug 248 positioned in a bore 250 and configured to engage a seating surface 252 defined by the aperture 244. The valve plug 248 is coupled to an elongated member 254 that extends through the aperture 244 toward the diaphragm 210 to operatively couple the diaphragm 210 and the valve plug 248. Generally, the position of the diaphragm 210 affects the position of the valve plug 248 relative to the aperture 244 and, thus, the flow of fluid through the regulator 200. More specifically, as the valve plug 248 moves toward and/or engages the seating surface 252, the amount of fluid flowing through the aperture 244 and, thus, between the inlet port 204 and the outlet port 240 decreases. Alternatively, as the valve plug 248 moves away from the seating surface 252, the amount of fluid flowing through the aperture 244 and, thus, between the inlet port 204 and the outlet port 240 increases.

In operation, outlet pressure applies an upward force on a second side 256 of the diaphragm 210. If the outlet pressure approaches and/or equals a set pressure, the upward force applied to the second side 256 of the diaphragm 210 overcomes the downward force applied to the first side 226 of the diaphragm 210 via the spring 216 and, thus, the diaphragm 210 and the valve plug 248 moves toward the seating surface 252. Alternatively, if the outlet pressure decreases below the set pressure, the downward force applied to the first side 226 via the spring 216 overcomes the upward force applied to the second side 256 via the outlet pressure and, thus, the diaphragm 210 and the valve plug 248 move away from the seating surface 252.

Generally, the known regulator 200 reduces and/or regulates the pressure between the first fluid passageway 242 and the outlet port 240 and the in-line regulator 202 regulates and/or reduces the pressure between the inlet port 204 and the first fluid passageway 242, as discussed in more detail below.

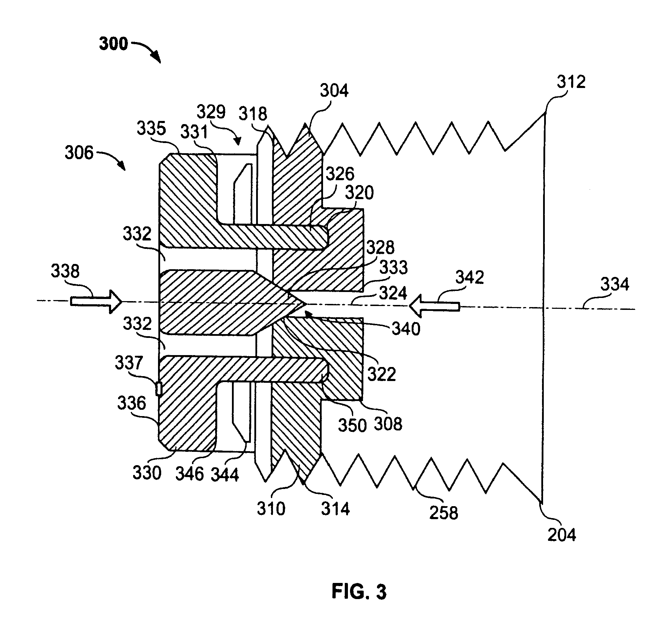

FIG. 3 depicts an example in-line regulator 300 (e.g., a first stage in-line pressure reducing regulator), which may be positioned as the in-line regulator 202 in the inlet port 204 of the known regulator 200. The in-line regulator 300 includes a body 304 and a piston assembly 306 both of which may be positioned in an inlet port of another regulator such as the inlet port 204 of the known regulator 200 (FIG. 2). In some examples, the body 304 and/or the piston assembly 306 may be made of a plastic material and/or a PEEK material (e.g., polyaryletheretherketone), which may enable the example in-line regulator 300 to not be provided with seals or o-rings while still maintaining sufficient sealing characteristics. In other examples, the body 304 may be made of a metal material because it may be exposed to relatively higher pressures (i.e., downstream pressures) and the piston assembly 306 may be made of a plastic material or a PEEK material because it is exposed to relatively lower pressures (i.e., upstream pressures). The in-line regulator 300 may be manufactured, produced and/or fabricated by any suitable methods such as, for example, machining, casting and/or injection molding. While not described in detail herein, the in-line regulator 300 may be advantageously configured to regulate back pressure and/or may be adjustable by, for example, utilizing biasing elements having different spring rates.

The body 304 includes a first portion 308 and a second portion 310. The first portion 308 extends from the second portion 310 toward an opening 312 of the inlet port 204. In some examples, the first portion 308 may have, for example, a hexagonal profile, to be engaged by a tool (not shown) to enable the in-line regulator 300 to be properly positioned within the inlet port 204. The second portion 310 includes external threads 314 that threadingly engage the interior threads 258 of the inlet port 204. Additionally, the second portion 310 includes a surface 318 that defines a recess 320 (e.g., a circumferential recess) and a seating surface 322 of an aperture 324. The aperture 324 extends through the first and second portions 308 and 310. Generally, the recess 320 is to receive an elongated member or collar 326 of the piston assembly 306 and the seating surface 322 is to receive a valve plug 328 of the piston assembly 306. The interaction between the recess 320 and the collar 326 enables an area 329 between a head 330 of the piston assembly 306 and the second portion 310 to be substantially at atmospheric pressure and, thus, fluid flowing through the in-line regulator 300 substantially does not act against a surface 331 of the head 330.

The piston assembly 306 includes the collar 326, the valve plug 328 and the head 330. The valve plug 328 is integrally coupled with the head 330 and is positioned between a plurality of apertures 332 that enable an inlet 333 of the aperture 324 of the body 304 to be fluidly coupled to the first fluid passageway 242 (FIG. 2). In some examples, the apertures 332 may be substantially parallel relative to an axis 334 of the inlet port 204.

A surface 335 of the head 330 may be sized to slidably and sealingly engage a surface 260 (FIG. 2) of the inlet port 204. In some examples, the head 330 may be provided with a sensor 337 to measure, for example, the temperature or the pressure of the downstream fluid. Generally, the position of the head 330 affects the position of the valve plug 328 relative to the aperture 324 and, thus, the flow of fluid through the in-line regulator 300. More specifically, as the valve plug 328 moves toward and/or engages the seating surface 322, the amount of fluid flowing through the aperture 324 and, thus, between the inlet port 204 and the first fluid passageway 242 (FIG. 2) decreases. Alternatively, as the valve plug 328 moves away from the seating surface 322, the amount of fluid flowing through the aperture 324 and, thus, between the inlet port 204 and the first fluid passageway 242 (FIG. 2) increases.

As discussed above, the in-line regulator 300 regulates and/or reduces the pressure between the inlet port 204 and the first fluid passageway 242 (FIG. 2). In operation, a pressure in the first fluid passageway 242 (FIG. 2) applies a force on a face 336 of the head 330 in a direction generally represented by arrow 338 that urges the valve plug 328 toward the seating surface 322 and a pressure in the inlet port 204 applies a force on a portion 340 of the valve plug 328 in a direction generally represented by arrow 342 that urges the valve plug 328 away from the seating surface 322. If the pressure in the first fluid passageway 242 (FIG. 2) approaches and/or equals a set pressure, the force applied to the face 336 of the head 330 overcomes the force applied to the portion 340 of the valve plug 328 and a spring force applied by a biasing element 344 (e.g., a belleville washer, a wave spring, etc.) positioned between the second portion 310 and the head 330 and, thus, the piston assembly 306 moves such that the valve plug 328 moves toward the seating surface 322. Alternatively, if the pressure in the first fluid passageway 242 (FIG. 2) decreases below the set pressure, the force applied to the portion 340 of the valve plug 328 and the spring force applied by the biasing element 344 overcome the force applied to the face 336 of the head 330 via the pressure in the first fluid passageway 242 (FIG. 2) and, thus, the piston assembly 306 moves such that the valve plug 328 moves away from the seating surface 322 to enable fluid to flow through the aperture 324 defined by the body 304 and the plurality of apertures 332 defined by the piston assembly 306.

To couple and/or position the in-line regulator 300 within the inlet port 204, a person may position the biasing element 344 around the collar 326 until a surface 346 of the biasing element 344 is adjacent to and/or engages the surface 331 of the head 330. Generally, the biasing element 344 urges the valve plug 328 away from the seating surface 322. The person then grasps the collar 326 and inserts the piston assembly 306 into the inlet port 204 such that the collar 326 extends toward the opening 312 until, for example, the surface 335 of the head 330 is positioned adjacent to and/or sealingly engages the surface 260 (FIG. 2) of the inlet port 204. Next, the person threads the external threads 314 of the body 304 into the interior threads 258 of the inlet port 204 and then engages and rotates (e.g., clockwise or counter clockwise) the first portion 308 via a tool (not shown) until an end 350 of the collar 326 is positioned in the recess 320, the surface 318 of the second portion 310 engages the biasing element 344 and/or the valve plug 328 is positioned adjacent to and/or engages the seating surface 322. Once the in-line regulator 300 is properly positioned in the inlet port 204, a pipe or other fluid coupling structure (not shown) may be threaded into the inlet port 204 and a fluid flow upstream of the in-line regulator 300 may be initiated.

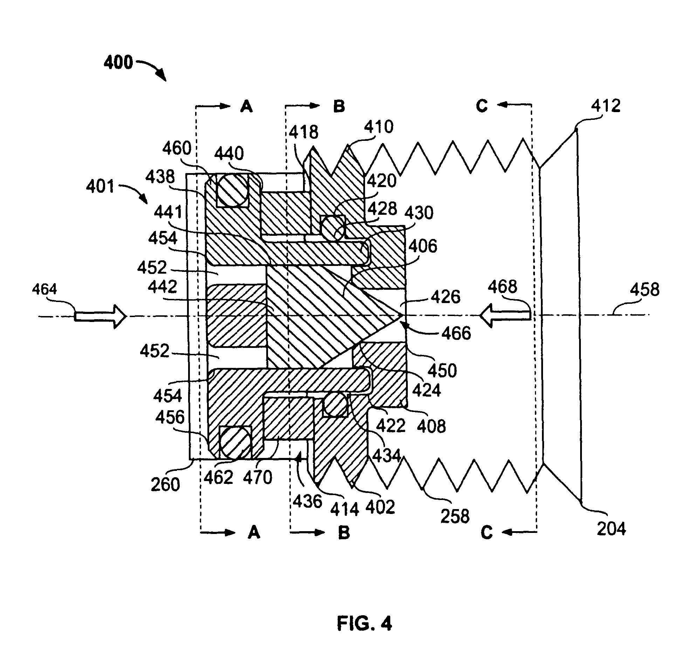

FIG. 4 depicts another example in-line regulator 400 (e.g., a first stage in-line pressure reducing regulator), which may be positioned in the inlet port of another regulator such as the inlet port 204 of the known regulator 200. The in-line regulator 400 of FIG. 4 is similar to the in-line regulator 202 of FIG. 2. The in-line regulator 400 includes a body 402, a piston assembly 404 and a valve plug 406, all of which may be positioned in the inlet port 204 of the known regulator 200 (FIG. 2). The body 402, the piston assembly 404 and/or the valve plug 406 may be made of a metal material and/or a plastic material depending on, for example, the pressure of the fluid that is to travel through the in-line regulator 400.

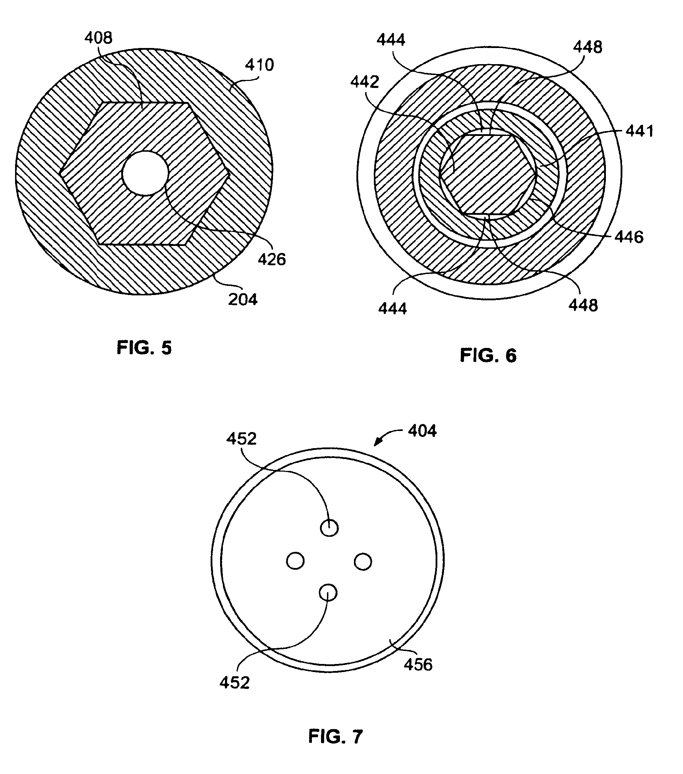

The body 402 includes a first portion 408 and a second portion 410. The first portion 408 extends from the second portion 410 toward an opening 412 of the inlet port 204. The first portion 408 may have, for example, a hexagonal profile (see FIG. 5), to be engaged by a tool (not shown) to enable the in-line regulator 400 to be properly positioned within the inlet port 204. The second portion 410 includes external threads 414 that threadingly engage the interior threads 258 of the inlet port 204. Additionally, the second portion 410 includes a bore 418, a groove 420, a recess 422 and a seating surface 424 of an aperture 426. The aperture 426 extends through the first and second portions 408 and 410. Generally, the groove 420 receives a seal or o-ring 428, the recess 422 is to receive an elongated member or collar 430 of the piston assembly 404 and the seating surface 424 is to receive the valve plug 406. The interaction between the seal or o-ring 428 and a surface 434 of the collar 430 and the interaction between the recess 422 and the collar 430 enable an area 436 between a head 438 of the piston assembly 404 and the second portion 410 to be at substantially atmospheric pressure and, thus, fluid flowing through the in-line regulator 400 does not act against a surface 440 of the head 438.

The piston assembly 404 includes the collar 430 and the head 438. The valve plug 406 is positioned at least partially within a bore 441 defined by the collar 430 via, for example, an interference fit, and at least partially positioned in the bore 418 defined by the body 402. Turning briefly to FIG. 6, in some examples, the bore 441 of the collar 430 has a cylindrical profile and a portion 442 of the valve plug 406 has a hexagonal profile. As such, a plurality of spaces or gaps 444 are positioned between a surface 446 of the bore 441 and surfaces 448 of the portion 442, which enable fluid to flow between an inlet 450 (FIG. 4) and the first fluid passageway 242 (FIG. 2).

Turning back to FIG. 4, the head 438 of the piston assembly 404 defines a plurality of apertures 452 (see FIG. 7) each having an opening 454 adjacent a face 456 of the head 438. In some examples, the apertures 452 may be substantially parallel relative to an axis 458 of the inlet port 204. The head 438 defines a groove 460 (e.g., a circumferential groove) to receive a seal 462 that slidably and sealingly engages the surface 260 (FIG. 2) of the inlet port 204. Generally, the position of the head 438 affects the position of the valve plug 406 relative to the aperture 426 and, thus, the flow of fluid through the in-line regulator 400. More specifically, as the valve plug 406 moves toward and/or engages the seating surface 424, the amount of fluid flowing through the aperture 426 and, thus, between the inlet port 204 and the first fluid passageway 242 (FIG. 2) decreases. Alternatively, as the valve plug 406 moves away from the seating surface 424, the amount of fluid flowing through the aperture 426 and, thus, between the inlet port 204 and the first fluid passageway 242 (FIG. 2) increases.

As discussed above, the in-line regulator 400 regulates and/or reduces the pressure between the inlet port 204 and the first fluid passageway 242 (FIG. 2). In operation, a pressure in the first fluid passageway 242 (FIG. 2) applies a force on the face 456 of the head 438 in a direction generally represented by arrow 464 that urges the valve plug 406 toward the seating surface 424 and a pressure in the inlet port 204 applies a force on a portion 466 of the valve plug 406 in a direction generally represented by arrow 468 that urges the valve plug 406 away from the seating surface 424. If the pressure in the first fluid passageway 242 (FIG. 2) approaches and/or equals a set pressure, the force applied to the face 456 of the head 438 overcomes the force applied to the portion 466 of the valve plug 406 and a spring force applied by a biasing element 470 (e.g., a belleville washer, a wave spring, etc.) positioned between the second portion 410 and the head 438 and, thus, the piston assembly 404 and the valve plug 406 move toward the seating surface 424. Alternatively, if the pressure in the first fluid passageway 242 (FIG. 2) decreases below the set pressure, the force applied to the portion 466 of the valve plug 406 and the spring force applied by the biasing element 470 overcome the force applied to the face 456 of the head 438 via the pressure in the first fluid passageway 242 (FIG. 2) and, thus, the piston assembly 404 and the valve plug 406 move away from the seating surface 424 to enable fluid to flow through the aperture 426 defined by the body 402, around the valve plug 406 and through the plurality of apertures 452 defined by the piston assembly 404.

The in-line regulator 400 may be coupled and/or positioned within the inlet port 204 in a substantially similar manner as the in-line regulator 300 as described above. As such, a description of coupling and/or positioning the in-line regulator 400 into the inlet port 204 will not be repeated here.

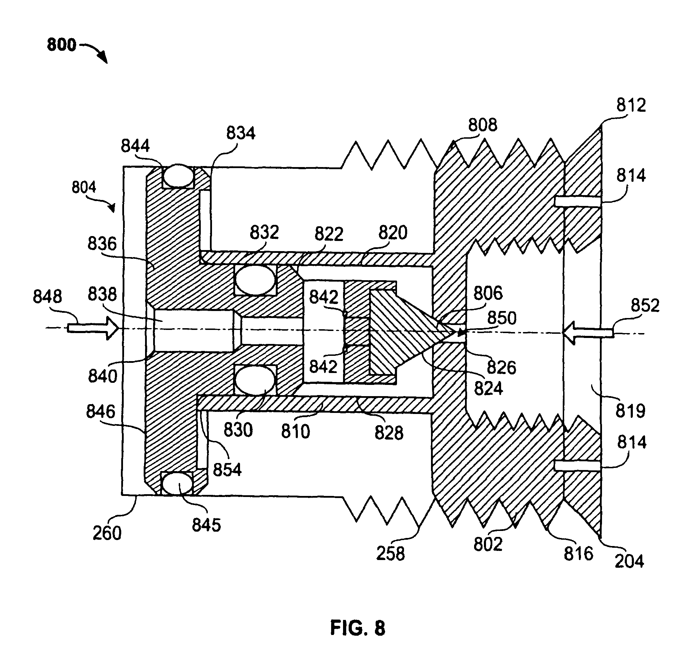

FIG. 8 depicts an example in-line regulator 800 (e.g., a first stage in-line pressure reducing regulator), which may be positioned in the inlet port of another regulator such as the inlet port 204 of the known regulator 200. The in-line regulator 800 includes a body 802, a piston assembly 804 and a valve plug 806, all of which are to be substantially positioned within the inlet port 204 of the known regulator 200 (FIG. 2). The body 802, the piston assembly 804 and/or the valve plug 806 may be made of a metal material and/or a plastic material depending on, for example, the pressure of the fluid that is to travel through the in-line regulator 800.

The body 802 includes a first portion 808 and a second portion 810. The second portion 810 is to extend into the inlet port 204 and the first portion 808 is to be positioned adjacent an opening 812 of the inlet port 204. In some examples, the first portion 808 may include a plurality of slots 814 to be engaged by a tool (not shown) to enable the in-line regulator 800 to be properly positioned within the inlet port 204. Additionally, the first portion 808 includes external threads 816 that threadingly engage the interior threads 258 of the inlet port 204 of the regulator 200 (FIG. 2) and an inlet port 819 to be threadingly engaged by a pipe or other fluid coupling structure (not shown). The second portion 810 includes a bore 820 in which an elongated member 822 of the piston assembly 804 is to be positioned and a seating surface 824 of an aperture 826. The aperture 826 is substantially defined by the first portion 808. Generally, the elongated member 822 slidingly and sealingly engages a surface 828 of the bore 820. More specifically, the interaction between a seal 830 positioned in a groove 832 (e.g., a circumferential groove) defined by the elongated member 822 and the surface 828 of the bore 820 substantially prevents the fluid flowing through the in-line regulator 800 from acting against a surface 834 of a head 836 of the piston assembly 804.

The piston assembly 804 includes the head 836 and the elongated member 822 that is operatively coupled to the valve plug 806. The valve plug 806 is positioned in the bore 820 of the second portion 810 and is configured to engage the seating surface 824. The piston assembly 804 includes an aperture 838 having a first opening 840 opposite a plurality of second openings 842. While the example in-line regulator 800 includes two second openings 842, the example in-line regulator 800 may have any number of second openings (e.g., 1, 2, 3, etc.). The head 836 defines a groove 844 (e.g., a circumferential groove) to receive a seal 845 that slidably and sealingly engages the surface 260 (FIG. 2) of the inlet port 204.

Generally, the position of the head 836 affects the position of the valve plug 806 relative to the aperture 826 and, thus, the flow of fluid through the in-line regulator 800. More specifically, as the valve plug 806 moves toward and/or engages the seating surface 824, the amount of fluid flowing through the aperture 826 and, thus, between the inlet port 204 and the first fluid passageway 242 (FIG. 2) decreases. Alternatively, as the valve plug 806 moves away from the seating surface 824, the amount of fluid flowing through the aperture 826 and, thus, between the inlet port 204 and the first fluid passageway 242 (FIG. 2) increases.

As discussed above, the in-line regulator 800 regulates and/or reduces the pressure between the inlet port 204 and the first fluid passageway 242 (FIG. 2). In operation, a pressure in the first fluid passageway 242 (FIG. 2) applies a force on a face 846 of the head 836 in a direction generally represented by arrow 848 that urges the valve plug 806 toward the seating surface 824 and a pressure in the inlet port 204 applies a force on a portion 850 of the valve plug 806 in a direction generally represented by arrow 852 that urges the valve plug 806 away from the seating surface 824. If the pressure in the first fluid passageway 242 (FIG. 2) approaches and/or equals a set pressure, the force applied to the face 846 of the head 836 overcomes the force applied to the portion 850 of the valve plug 806 and, thus, the piston assembly 804 and the valve plug 806 move toward the seating surface 824. Alternatively, if the pressure in the first fluid passageway 242 (FIG. 2) decreases below the set pressure, the force applied to the portion 850 of the valve plug 806 overcomes the force applied to the face 846 of the head 836 via the pressure in the first fluid passageway 242 (FIG. 2) and, thus, the piston assembly 804 and the valve plug 806 move away from the seating surface 824 to enable fluid to flow through the aperture 826 defined by the body 802, at least one of the second openings 842 and the aperture 838 defined by the piston assembly 804.

To couple and/or position the in-line regulator 800 within the inlet port 204, a person grasps the elongated member 822 and inserts the piston assembly 804 into the inlet port 204 such that the elongated member 822 extends toward the opening 812 until, for example, the seal 845 positioned in the groove 844 is adjacent to and/or sealingly engages the surface 260 (FIG. 2) of the inlet port 204. Next, the person aligns the elongated member 822 with the bore 820 of the second portion 810 and threads the external threads 816 of the body 802 into the interior threads 258 of the inlet port 204. A tool (not shown) is then positioned in the slots 814 and rotated (e.g., clockwise or counter clockwise) to rotate the body 802 until an end 854 of the second portion 810 is positioned adjacent to and/or engages the surface 834 of the head 836 and/or the valve plug 806 is positioned adjacent to and/or engages the seating surface 824. Once the in-line regulator 800 is properly positioned in the inlet port 204, a pipe or other fluid coupling structure (not shown) may be threaded into the inlet port 819 and a fluid flow upstream of the in-line regulator 800 may be initiated.

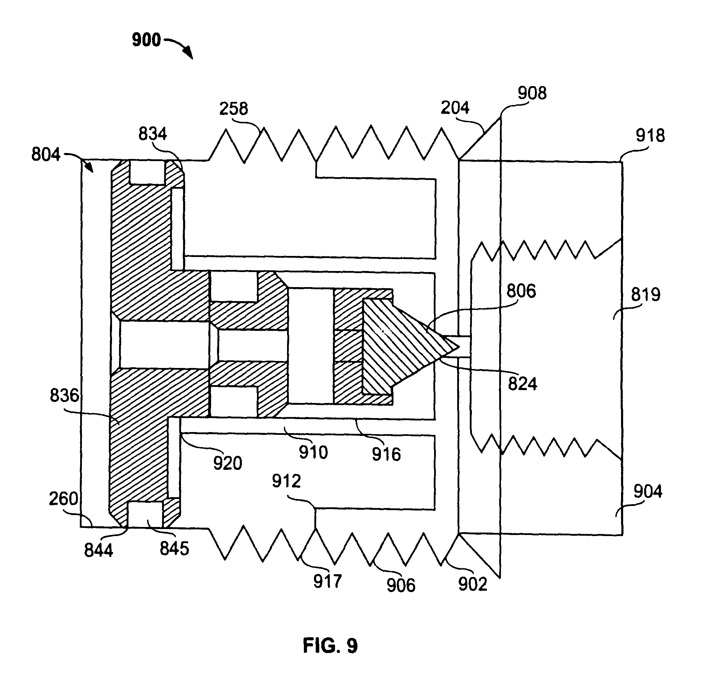

FIG. 9 depicts an example in-line regulator 900 (e.g., a first stage in-line pressure reducing regulator), which may be positioned in the inlet port of another regulator such as the inlet port 204 of the known regulator 200 (FIG. 2). The in-line regulator 900 of FIG. 9 is substantially similar to the in-line regulator 800 of FIG. 8. As such, reference numbers used in FIG. 9 that are the same as references numbers used in FIG. 8 correspond to the same or similar elements. In contrast to the in-line regulator 800 of FIG. 8, a body 902 of the in-line regulator 900 of FIG. 9 includes a first portion 904 and a second portion 906. The second portion 906 is to extend into the inlet port 204 and the first portion 904 is to extend away from an opening 908 of the inlet port 204. The second portion 906 includes an elongated portion 910 and a threaded portion 912 at a distance from the elongated portion 910. The threaded portion 912 is to threadingly engage the interior threads 258 of the inlet port 204.

To couple and/or position the in-line regulator 900 into the inlet port 204, a person grasps the elongated member 822 and inserts the piston assembly 804 into the inlet port 204 such that the elongated member 822 extends toward the opening 908 until, for example, the seal 845 positioned in the groove 844 is adjacent to and/or sealingly engages the surface 260 (FIG. 2) of the inlet port 204. Next, the person aligns the elongated member 822 with a bore 916 of the elongated portion 910 and threads external threads 917 of the threaded portion 912 into the interior threads 258 of the inlet port 204. A tool (not shown) is then engaged to a surface 918 of the first portion 904 and rotated (e.g., clockwise or counter clockwise) to rotate the body 902 until an end 920 of the elongated portion 910 is positioned adjacent to and/or engages the surface 834 of the head 936 and/or the valve plug 806 is positioned adjacent to and/or engages the seating surface 824. Once the in-line regulator 900 is properly positioned in the inlet port 204, a pipe or other fluid coupling structure (not shown) may be threaded into the inlet port 819 and a fluid flow upstream of the in-line regulator 900 may be initiated.

Although certain example methods, apparatus and articles of manufacture have been described herein, the scope of coverage of this patent is not limited thereto. On the contrary, this patent covers all methods, apparatus and articles of manufacture fairly falling within the scope of the appended claims either literally or under the doctrine of equivalents.

## Claims

1. An in-line pressure regulator (300), comprising:
a body (304) having threads (314) arranged to threadingly engage a port (204) of another pressure regulator (200), wherein the body (304) defines an inlet (333), an aperture (324), and a seating surface (322);
a piston assembly (306) operatively coupled to a valve plug (328), wherein the piston assembly (306) is slidably movable relative to the body (304) to move the valve plug (328) relative to the aperture (324) and the seating surface (322) to control a flow of fluid between the inlet (333) and the other regulator (200), and wherein the piston assembly (306) is sized and arranged to slidably and sealingly engage a surface (260) of the port of the other pressure regulator (200);
**characterized in that**;
the body (304) is sized and arranged to permit the body (304) of the in-line pressure regulator (300) to be disposed entirely inside an inlet port (204) of the other pressure regulator (200).

2. The in-line pressure regulator (300) as defined in claim 1, wherein the valve plug (328) is at least partially positioned in a bore (820) of the body (304), and wherein the piston assembly (306) sealingly engages a surface (828) of the bore (820).

3. The in-line pressure regulator (300) as defined in claim 1, wherein the piston assembly (306) defines at least one aperture (332) to fluidly couple the inlet (333) to the other regulator (200).

4. The in-line pressure regulator (300) as defined in claim 1, wherein the valve plug (328), via the piston assembly (306), is arranged to move toward the aperture (324) and the seating surface (322) in response to a pressure in the other pressure regulator (200).

5. The in-line pressure regulator (300) as defined in claim 1, wherein the threads (314) are external threads.

6. The in-line pressure regulator (300) as defined in claim 1, further comprising a biasing element (344) positioned between a portion of the piston assembly (306) and a surface of the body (304) to urge the valve plug (328), via the piston assembly (306), away from the aperture (324) and the seating surface (322).

7. The in-line pressure regulator (300) as defined in claim 1, wherein the body (304) comprises a first material and the piston assembly (306) comprises a second material different from the first material.

8. The in-line pressure regulator (300) as defined in claim 1, wherein the in-line pressure regulator (300) is a first stage in-line pressure reducing regulator.

9. The in-line pressure regulator (300) as defined in claim 1, further comprising a threaded port (819), adjacent the inlet (333), to function as an inlet port.

10. The in-line pressure regulator (300) as defined in claim 1, wherein the body (304) includes a recess (320) adjacent the aperture (324), and wherein the piston assembly (306) includes a collar (326), the recess (320) arranged to receive the collar (326) when the valve plug (328) engages the seating surface (322).

## Patentansprüche

1. Leitungsinterner Druckregler (300), Folgendes umfassend:
einen Körper (304) mit Gewindegängen (314), die dazu eingerichtet sind, einen Anschluss (204) eines anderen Druckreglers (200) in Gewindeeingriff zu nehmen, wobei der Körper (304) einen Einlass (333), eine Öffnung (324) und eine Sitzfläche (322) umfasst;
eine Kolbeneinheit (306), die in Wirkverbindung mit einem Ventilstopfen (328) steht, wobei die Kolbeneinheit (306) in Bezug auf den Körper (304) gleitbeweglich ist, um den Ventilstopfen (328) in Bezug auf die Öffnung (324) und die Sitzfläche (322) zu bewegen, um einen Fluiddurchfluss zwischen dem Einlass (333) und dem anderen Regler (200) zu regeln, und wobei die Kolbeneinheit (306) dazu bemessen und eingerichtet ist, an einer Fläche (260) des Anschlusses des anderen Druckreglers (200) gleitend und abdichtend anzugreifen;
**dadurch gekennzeichnet, dass**
der Körper (304) dazu bemessen und eingerichtet ist, den Körper (304) des leitungsinternen Druckreglers (300) vollständig innerhalb eines Einlassanschlusses (204) des anderen Druckreglers (200) angeordnet sein zu lassen.

2. Leitungsinterner Druckregler (300) nach Anspruch 1, wobei der Ventilstopfen (328) zumindest teilweise in einer Bohrung (820) des Körpers (304) positioniert ist, und wobei die Kolbeneinheit (306) abdichtend an einer Fläche (828) der Bohrung (820) angreift.

3. Leitungsinterner Druckregler (300) nach Anspruch 1, wobei die Kolbeneinheit (306) mindestens eine Öffnung (332) zum fluidtechnischen Anschluss des Einlasses (333) an den anderen Regler (200) definiert.

4. Leitungsinterner Druckregler (300) nach Anspruch 1, wobei der Ventilstopfen (328) über die Kolbeneinheit (306) dazu eingerichtet ist, sich im Ansprechen auf einen Druck im anderen Druckregler (200) zu der Öffnung (324) und der Sitzfläche (322) hin zu bewegen.

5. Leitungsinterner Druckregler (300) nach Anspruch 1, wobei es sich bei den Gewindegängen (314) um Außengewindegänge handelt.

6. Leitungsinterner Druckregler (300) nach Anspruch 1, darüber hinaus ein Beaufschlagungselement (344) umfassend, das zwischen einem Abschnitt der Kolbeneinheit (306) und einer Fläche des Körpers (304) positioniert ist, um den Ventilstopfen (328) über die Kolbeneinheit (306) zwangsweise von der Öffnung (324) und der Sitzfläche (322) weg zu bewegen.

7. Leitungsinterner Druckregler (300) nach Anspruch 1, wobei der Körper (304) ein erstes Material umfasst, und die Kolbeneinheit (306) ein zweites Material umfasst, das sich vom ersten Material unterscheidet.

8. Leitungsinterner Druckregler (300) nach Anspruch 1, wobei es sich bei dem leitungsinternen Druckregler (300) um einen leitungsinternen ErststufenDruckminderer handelt.

9. Leitungsinterner Druckregler (300) nach Anspruch 1, darüber hinaus einen mit Gewinde versehenen Anschluss (819) umfassend, der an den Einlass (333) angrenzt, um als Einlassanschluss zu fungieren.

10. Leitungsinterner Druckregler (300) nach Anspruch 1, wobei der Körper (304) eine Ausnehmung (320) angrenzend an die Öffnung (324) umfasst, und wobei die Kolbeneinheit (306) einen Ansatz (326) umfasst, wobei die Ausnehmung (320) dazu eingerichtet ist, den Ansatz (326) aufzunehmen, wenn der Ventilstopfen (328) an der Sitzfläche (322) angreift.

## Revendications

1. Régulateur de pression en ligne (300), comprenant :
un corps (304) ayant des filets (314) agencés pour venir en prise de manière vissée avec un orifice (204) d'un autre régulateur de pression (200), dans lequel le corps (304) définit une entrée (333), une ouverture (324), et une surface d'appui (322) ;
un ensemble de piston (306) couplé de manière opérationnelle à un obturateur de clapet (328), dans lequel l'ensemble de piston (306) est mobile de manière coulissante par rapport au corps (304) pour déplacer l'obturateur de clapet (328) par rapport à l'ouverture (324) et à la surface d'appui (322) pour commander un écoulement de fluide entre l'entrée (333) et l'autre régulateur (200), et dans lequel l'ensemble de piston (306) est dimensionné et agencé pour venir en contact de manière coulissante et étanche avec une surface (260) de l'orifice de l'autre régulateur de pression (200) ;
**caractérisé en ce que** ;
le corps (304) est dimensionné et agencé pour permettre de disposer le corps (304) du régulateur de pression en ligne (300) entièrement à l'intérieur de l'orifice d'entrée du orifice (204) de l'autre régulateur de pression (200).

2. Régulateur de pression en ligne (300) selon la revendication 1, dans lequel l'obturateur de clapet (328) est au moins partiellement positionné dans un alésage (820) du corps (304), et dans lequel l'ensemble de piston (306) est en contact de manière étanche avec une surface (828) de l'alésage (820).

3. Régulateur de pression en ligne (300) selon la revendication 1, dans lequel l'ensemble de piston (306) définit au moins une ouverture (332) pour relier hydrauliquement l'entrée (333) à l'autre régulateur (200).

4. Régulateur de pression en ligne (300) selon la revendication 1, dans lequel l'obturateur de clapet (328), par l'intermédiaire de l'ensemble de piston (306), est agencé pour se déplacer vers l'ouverture (324) et la surface d'appui (322) en réponse à une pression dans l'autre régulateur de pression (200).

5. Régulateur de pression en ligne (300) selon la revendication 1, dans lequel les filets (314) sont des filets externes.

6. Régulateur de pression en ligne (300) selon la revendication 1, comprenant en outre un élément de sollicitation (344) positionné entre une partie de l'ensemble de piston (306) et une surface du corps (304) pour repousser l'obturateur de clapet (328), par l'intermédiaire de l'ensemble de piston (306), loin de l'ouverture (324) et de la surface d'appui (322).

7. Régulateur de pression en ligne (300) selon la revendication 1, dans lequel le corps (304) comprend un premier matériau et l'ensemble de piston (306) comprend un second matériau différent du premier matériau.

8. Régulateur de pression en ligne (300) selon la revendication 1, dans lequel le régulateur de pression en ligne (300) est un régulateur de réduction de pression en ligne de premier étage.

9. Régulateur de pression en ligne (300) selon la revendication 1, comprenant en outre un orifice fileté (819), adjacent à l'entrée (333), pour agir comme un orifice d'entrée.

10. Régulateur de pression en ligne (300) selon la revendication 1, dans lequel le corps (304) inclut un évidement (320) adjacent à l'ouverture (324), et dans lequel l'ensemble de piston (306) comprend un collier (326), l'évidement (320) étant agencé pour recevoir le collier (326) quand l'obturateur de clapet (328) vient en contact avec la surface d'appui (322).
